# EUROPEAN PATENT SPECIFICATION

(11) **EP 0 506 056 B1**
(45) Date of publication and mention of the grant of the patent: **19.07.1995**
(21) Application number: 92105234.6
(22) Date of filing: 26.03.1992
(51) Int. Cl.: B60Q 1/04

(54) **Headlamp**
Scheinwerfer
Phare

(30) Priority: 27.03.1991 JP 85925/91
(43) Date of publication of application: 30.09.1992
(73) Proprietor: Stanley Electric Co., Ltd., Meguro-ku Tokyo 153 (JP)
(72) Inventor: Sekiguchi, Tsuneo, Tokyo (JP)
(74) Representative: Dr. Elisabeth Jung Dr. Jürgen Schirdewahn Dipl.-Ing. Claus Gernhardt

(56) References cited:
- EP-A- 0 468 753
- US-A- 4 198 674

## Description

### BACKGROUND OF THE INVENTION

### Field of the Invention

The present invention relates to a headlamp mounted on an automobile, and more specifically to a method for constructing a headlamp.

### Description of the Prior Art

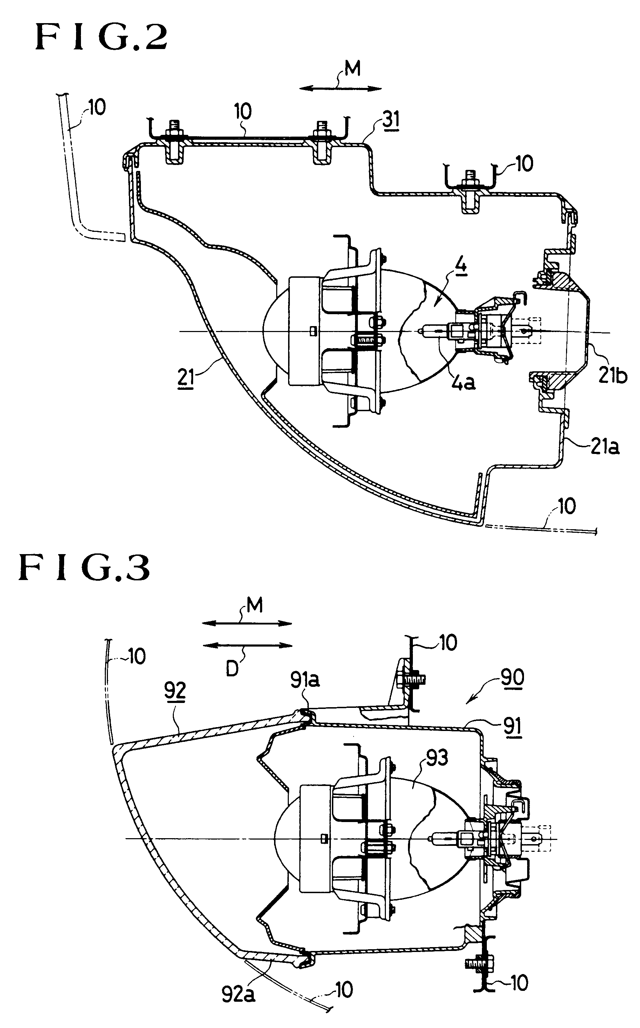

Fig. 3 shows an example of construction of a conventional headlamp 90 of this kind. For example, a lamp body 93 of a projector type is encased in a chamber formed with a housing 91 formed so that at the time of molding, a removing direction D of a mold is set in a lateral direction of a vehicle indicated at arrow M in the figure and a front cover 92 mounted so as to cover the housing 91. When the headlamp 90 is mounted on a vehicle body 10, it is normally mounted by screws or the like in a direction along the lateral direction M of the vehicle in terms of restriction of construction of the mold for forming the housing 91.

However, the headlamp 90 having the aforementioned conventional construction involves some problems listed below:
(1) To respond to the recent stream of automobile design in which the front lens 92 is extended into the side of the vehicle, a lens fitting groove 91a provided in the housing 91 in order that the housing 91 and the front lens 92 are mounted is exposed to the side. In order to conceal this, the shapes of the housing 91 and the front lens 92 become complicated to make formation difficult.
(2) At the same time, in the side portion 92a of the front lens 92 extended to the side of the vehicle 92, it assumes the state substantially parallel with the removing direction of the mold. Therefore, adjustment of the characteristic of distribution of light to the side portion 92a or the lens cutting for the purpose of ornament are difficult to perform. There are limitations in terms of performance as well as design.
(3) The outside of the vehicle 10 is narrow in space to make it difficult to secure a mounting position of the headlamp 90 to the vehicle 10.

These problems should be solved.

### SUMMARY OF THE INVENTION

For solving the aforementioned problems, the present invention provides a headlamp as defined by claim 1. Claims 2 to 4 describe preferred developments of the inventive headlamp.

### BRIEF DESCRIPTION OF THE DRAWINGS

Fig. 1 is a sectional view showing one embodiment of a headlamp according to the present invention.
Fig. 2 is a sectional view showing a further embodiment according to the present invention
Fig. 3 is a sectional view showing a conventional example.

### DETAILED DESCRIPTION OF THE PREFERRED EMBODIMENTS

The present invention will be described in detail in connection with one embodiment shown in the drawings.

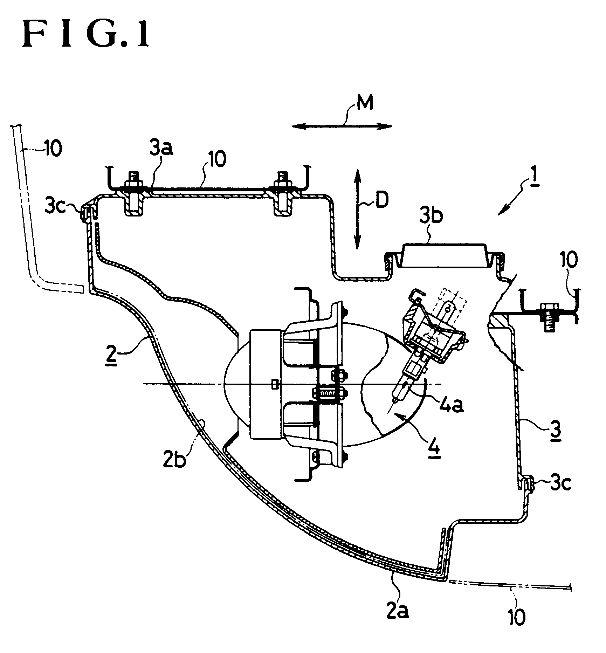

In Fig. 1, a reference numeral 1 designates a headlamp according to the present invention. The headlamp 1 is similar to that shown in prior art in that a lamp body 4 is encased in a chamber formed with a front lens 2 and a housing 3. In the present invention, however, the housing 3 is formed by a mold having a removing direction D which is perpendicular to the driving direction of a vehicle as indicated by arrow M in the figure at the time of forming the housing 3.

The removing direction D is set to a direction which is perpendicular to the driving direction M of the vehicle whereby a mounting boss 3a for mounting the mounting 3, i.e., the headlamp 1, which is formed simultaneously with molding of the housing 3, on the vehicle 10 is also provided in parallel with the removing direction D. Thereby, the headlamp 1 is threadedly mounted in the direction perpendicular to the driving direction M of the vehicle. Similarly, a bulb replacing opening 3b provided to replace a bulb 4a of the lamp body 4 is also provided in parallel with the removing direction D.

Since the housing 3 is set to the removing direction D, a lens fitting groove 3c formed integral with the housing 3 and provided to mount the front cover 2 is also along the removing direction D. The removing direction from the mold at the time of molding the front lens 2 is also suitably changed to a direction parallel with the removing direction D, for example.

The function and effect of the headlamp 1 constructed as described above will be described. First, since the removing direction D of the housing 3 is set to be perpendicular to the driving direction M of the vehicle, the lens fitting groove 3c is not exposed to the side. The shapes of the front lens 2 and the housing 3 are simplified, and the shapes are given freedom. The enlargement of freedom in terms of design and the simplification in terms of manufacture are facilitated.

In the front lens 2, the side portion 2a along the side of the vehicle intersects at right angles to the removing direction D of the mold. This facilitates execution of a lens cut 2b for ornament or the like with respect to the side portion 2a. Particularly, the enhancement of the beauty of the side portion 2a formed for design' sake.

In addition, the removing direction D of the housing 3 is made to intersect at right angles to the lateral direction M of the vehicle whereby the mounting boss 3a is provided on the side in which the surface in contact with the vehicle 10 is wide, thus securing a sufficient mounting area to make mounting positive.

Fig. 2 shows a modified embodiment of the present invention. In this embodiment, a leg 21a of a front lens 21 is extended to a position of the back of the lamp body 4 at the rear of the vehicle. In the thus extended leg 21a, a bulb replacing opening 21b corresponding to the lamp body 4 is provided on the side of the lateral direction M of the vehicle by applying the procedure of a lateral-removing mold.

With the above-described arrangement, a combined surface between the front cover 21 and the housing 31 is substantially perpendicular to the removing direction. Particularly, the housing 31 is in the form of a shallow plate, and the structure thereof is simplified. The bulb replacing opening 21b is provided at a position similar to that of prior art. For example, replacement of a bulb can be complied with the conventional procedure.

Those other than the aforementioned functions and effects are similar to those of the previous embodiment, and detailed description thereof will be omitted.

As described above, according to the present invention, in the structure of the headlamp, the removing direction at the time of molding the housing is set to a direction intersecting at right angles to the lateral direction of the vehicle. Therefore, even in case of requirement for the shape in which the front lens is extended to the side of the vehicle, a joint portion between the front lens and the housing is not exposed to the side of the vehicle, thus exhibiting extremely excellent effects in improvement of external appearance and in simplification of manufacture.

With the aforementioned structure, the side portion of the front lens for which is required high-degree performances such as structure in terms of design or sideward diffusion of light is made to be substantially perpendicular to the removing direction of the mold. Therefore, the lens cut for the side portion is made free, thus exhibiting excellent effects in improvement of externaal appearance as well as enhancement of performance.

In addition, with the aforementioned struture, there is another effect in that mounting of the headlamp on the vehicle can be carried out at the position of the vehicle intersecting at right angles to the moving direction to secure a sufficient mounting area to make mounting positive.

## Claims

1. A headlamp (1) in which a lamp body (4) is encased by a front cover (2;21) and a housing (3;31), characterized in that the molding direction (D) of the housing (3;31) is perpendicular to the driving direction of the vehicle.

2. The headlamp according to claim 1, wherein the mounting direction of the housing (3;31) is perpendicular to the driving direction of the vehicle.

3. The headlamp according to claim 1 or 2, wherein a portion of a front cover (2) extends behind the rear of a lamp body (4).

4. The headlamp according to claim 3, wherein a bulb replacing opening (21b) is provided behind said lamp body (4).

## Patentansprüche

1. Scheinwerfer (1), in welchem ein Lampenkörper (4) durch eine vordere Abdeckung (2; 21) und ein Gehäuse (3; 31) umschlossen ist,
**dadurch gekennzeichnet,**
daß die Richtung (D) des Formens des Gehäuses (3; 31) rechtwinklig zu der Fahrtrichtung des Fahrzeugs verläuft.

2. Scheinwerfer nach Anspruch 1, in welchem die Richtung der Montage des Gehäuses (3; 31) rechtwinklig zu der Fahrtrichtung des Fahrzeugs verläuft.

3. Scheinwerfer nach Anspruch 1 oder 2, in welchem ein Teil der vorderen Abdeckung (2) sich hinter die Rückseite eines Lampenkörpers (4) erstreckt.

4. Scheinwerfer nach Anspruch 3, in welchem eine Birnenaustauschöffnung (21b) hinter dem Lampenkörper (4) vorgesehen ist.

## Revendications

1. Phare (1) dans lequel un corps de lampe (4) est emboîté dans un boîtier (3,31) fermé par une glace frontale (2,21), *caractérisé en ce que* la direction de moulage (D) du boîtier (3,31) est perpendiculaire à la direction de déplacement du véhicule.

2. Phare selon la revendication 1, *caractérisé en ce que* la direction de montage du boîtier (3,31) est perpendiculaire à la direction de déplacement du véhicule.

3. Phare selon une quelconque des revendications 1 ou 2, *caractérisé en ce qu*'une partie de la glace frontale (2) s'étend derrière la partie arrière du corps de lampe (4).

4. Phare selon la revendication 3, *caractérisé en ce qu*'une trappe (21b) de remplacement de l'ampoule est disposée derrière ledit corps de lampe (4).
